# EUROPEAN PATENT APPLICATION

(11) **EP 4 296 271 A1**
(43) Date of publication of application: **27.12.2023**
(21) Application number: 21926220.1
(22) Date of filing: 02.04.2021
(51) Int. Cl.: C07F 5/06

(54) **PREPARATION METHOD FOR TRIMETHYLALUMINUM**

(30) Priority: 20.02.2021 CN 202110190944
(71) Applicant: Jiangsu Nata Opto-Electronic Material Co., Ltd, Suzhou, Jiangsu 215000 (CN)
(72) Inventor: YANG, Min, Suzhou, Jiangsu 215000 (CN); YANG, Xue, Suzhou, Jiangsu 215000 (CN); SUN, Xiangzhen, Suzhou, Jiangsu 215000 (CN)
(74) Representative: Plasseraud IP
(86) International application number: PCT/CN2021/085466
(87) International publication number: WO 2022/174503

(57) **Abstract**

The present application provides a preparation method for trimethyl aluminum, comprising the steps of: reacting methyl aluminum dichloride or sesquimethyl aluminium chloride or dimethyl aluminum chloride with a system of metal M and methyl chloride in the presence of catalyst and solvent to produce trimethyl aluminum and chloride of metal M; wherein the catalyst is selected from metals or their ions which rank after metallic aluminum in the electrochemical series; the metal M is selected from alkali metals, alkaline earth metals or combinations thereof. The catalyst can significantly increase the reaction rate, thus allowing the reaction to be operated under very simple experimental conditions such as near atmospheric pressure, with higher reaction yields and higher purity of the products, and without by-products of aluminum metal and unreacted alkali or alkaline earth metals in products, making the handling of the products easier.

## Description

### FIELD OF THE INVENTION

The present application relates to the field of metal-organic chemistry, and specifically to a preparation method for trimethyl aluminum.

### BACKGROUND OF THE INVENTION

Trimethyl aluminum is very important chemical raw material, and applied mainly in the fields of (1) organic catalysis: trimethyl aluminum and water can react to form highly-active methyl aluminoxane, which is one of the most important co-catalysts in metallocene catalytic systems; (2) organic synthesis: trimethyl aluminum can be oligomerized with ethylene to form high-carbon alkylaluminum, which can form higher straight-chain primary alcohols after oxidation and hydrolysis; trimethyl aluminum can also be used to prepare other organometallic compounds, for example, tetramethyl tin can be prepared by reacting trimethyl aluminum with tin(IV) tetrachloride; (3) polymer chemical engineering: the catalytic system formed of trimethyl aluminum and transition metal salts can lead to stereospecific polymerization of olefins; (4) others: for example, trimethyl aluminum can be used as liquid fuel for rockets, alkylation reagent in fine organic synthesis, etc.

In the prior art, a method for preparing trimethyl aluminum comprises reaction between magnesium-aluminum alloy and halogenated alkanes. For example, Chinese Patent document (Pub.No.: CN105175440A, Pub.Date: December 23, 2015) discloses a method for obtaining trimethyl aluminum: reacting halomethane with magnesium aluminum alloy in ether solvent to obtain a complex of trimethyl aluminum ether ligands, which is then decomposed at high temperature after substitution with high-boiling point organic tertiary amine or organic phosphine. In this method, the ether ligands are firmly bonded to trimethyl aluminum, making it quite difficult to be completely removed, resulting in low purity in trimethyl aluminum product.

In the prior art, a further method of preparing trimethyl aluminum comprises reaction between high-carbon chain alkylaluminum and methyl halide. For example, U.S. Patent document (Pub.No.: US4948906A, Pub.Date: August 14, 1990) discloses a method of obtaining trimethyl aluminum by using triethyl aluminum and methyl halide as raw materials via ligand exchange in the presence of a Lewis acid catalyst such as bismuth chloride. In this method, triethyl aluminum must be used in excess amount, resulting in high cost of raw material, incomplete ligand exchange, formation of more by-products and low reaction yield.

In the prior art, another method for preparing trimethyl aluminum comprises reacting methyl aluminum dichloride or sesquimethyl aluminum chloride or dimethyl aluminum chloride with alkali metal or alkaline earth metal. For example, Japanese Patent document (Pub. No.: JP2009263326A, Pub. Date: Nov. 12, 2009) discloses a method of producing trimethyl aluminum by reacting sesquimethyl aluminum chloride with alkali metals. U.S. Patent document (Pub. No.: US5359116A, Pub. Date: Oct. 25, 1994) discloses a method of producing trimethyl aluminum by reacting dimethyl aluminum chloride with sodium metal, etc. In the above methods, when the alkali metal or alkaline earth metal reacts with methyl aluminum dichloride or sesquimethyl aluminum chloride or dimethyl aluminum chloride, the by-product metallic aluminum is easy to wrap around the surface of the alkali metal or alkaline earth metal to form a hard shell, preventing the reaction from continuing, thereby making the reaction incomplete and the reaction yield low. And the by-product metallic aluminum and unreacted alkali metals or alkaline earth metals have very high activity, which increases the risk of waste disposal.

In order to solve the problem caused by metallic aluminum wrapping alkali metal or alkaline earth metal, Chinese Patent documents (Pub. No.: CN111072700A, Pub. Date: Apr. 28, 2020; Pub. No.: CN111116625A, Pub. Date: May 8, 2020) disclose a method for producing trimethyl aluminum by reacting methyl chloride, sodium, and methyl aluminum dichloride or sesquidimethyl aluminum chloride or dimethyl aluminum chloride in absence of a catalyst. However, this method cannot be practiced. After being charged, sodium metal will quickly clump, and in absence of catalyst, it is difficult for the resulting aluminum to further react with methyl chloride, resulting in an extremely low reaction yield and that the resulting product is trimethyl aluminum formed of reduction of only part of the metal sodium asraw material. That is to say, the problem caused by metallic aluminum wrapping alkali metal or alkaline earth metal still fails to be effectively solved.

Therefore, in the prior art, the methods of preparing trimethyl aluminum still have a great number ofdefects, and it is especially important to develop a method of preparng trimethyl aluminum.

### SUMMARY OF THE INVENTION

The present application provides a preparation method for trimethyl aluminum, so as to solve the problems of low reaction rate, low reaction yield, strict experimental requirements, and existence of many difficult-to-handle by-products in the preparation of trimethyl aluminum in the prior art.

On one hand, the present application provides a preparation method for trimethyl aluminum, comprising the steps of: reacting methyl aluminum dichloride or sesquimethyl aluminum chloride or dimethyl aluminum chloride with a system of metal M and methyl chloride in the presence of catalyst and solvent to produce trimethyl aluminum and chloride of metal M; wherein the catalyst is selected from metals or their ions which rank after metallic aluminum in the electrochemical series; the metal M is selected from alkali metals, alkaline earth metals or combinations thereof.

In one embodiment, in the presence of the catalyst and the solvent, the methyl aluminum dichloride or sesquimethyl aluminum chloride or dimethyl aluminum chloride is reacted with the metal M to produce in situ newly generated aluminum, and the newly generated aluminum is reacted with the methyl chloride to produce sesquimethyl aluminum chloride.

In one embodiment, the methyl chloride is introduced after the methyl aluminum dichloride, sesquimethyl aluminum chloride or dimethyl aluminum chloride has been mixed with a portion of the metal M.

In one embodiment, a weight ratio of the portion of metal M is (0.001-0.5): 1 relative to the total metal M required for the reaction.

In one embodiment, the sesquimethyl aluminum chloride is obtained by reacting aluminum metal with methyl chloride in the presence of the catalyst and an initiator.

In one embodiment, the initiator is at least one selected from elemental iodine, 1,2-dibromoethane, iodomethane, and sesquimethyl aluminum chloride.

In one embodiment, the catalyst is at least one selected from metals or their ions of group IB, group IIB, group IIIB, group IVB, group VB, group VIB, group VIIB, group VIII, group IIIA, and group IVA which rank after aluminum in the electrochemical series.

In one embodiment, the catalyst is at least one selected from group IB metals or their ions and group VIII metals or their ions which rank after aluminum in the electrochemical series.

In one embodiment, the catalyst is metal elements or ions of at least one selected from silver, gold, nickel, palladium, platinum, copper, iron, and rhodium, or alloys of at least two selected from silver, gold, nickel, palladium, platinum, copper, iron, and rhodium.

In one embodiment, the catalyst is used in a weight ratio of (0.0001-0.1):1 relative to the elemental aluminum in the methyl aluminum dichloride, sesquimethyl aluminum chloride, or dimethyl aluminum chloride.

In one embodiment, the metal M is metal elements of at least one selected from sodium, potassium, and magnesium, or alloys of at least two selected from sodium, potassium, and magnesium.

In one embodiment, the solvent is at least one selected from n-hexadecane, n-decane, 1,2-o-dichlorobenzene, 1,2,3,4-tetrahydronaphthalene, squalane, and toluene.

In one embodiment, the temperature of the reaction is between 80 °C and 130 °C.

In one embodiment, the reaction is carried out at a pressure between one atmosphere to 130 kPa.

In one embodiment, flow rate of the methyl chloride is regulated according to temperature variation of the reaction and readings of a gas flow meter installed at the end of the experimental apparatus.

Beneficial effects: Trimethyl aluminum is produced by reacting methyl aluminum dichloride or sesquimethyl aluminum chloride or dimethyl aluminum chloride with a system of metal M and methyl chloride in the presence of catalyst and solvent. The catalyst significantly increases the reaction rate, allowing the reaction to be conducted under very simple experimental conditions, such as near normal pressure, with higher yields and product purity, and without by-products of aluminum metal and unreacted alkali or alkaline earth metals in the products, making it easier to handle the products.

### DETAILED DESCRIPTION OF THE INVENTION

In order to make the foregoing objects, features and advantages of the present application more understandable, many specific details are set forth in the following description to facilitate a full understanding of the present application. However, the present invention can be implemented in many other ways than those described herein, and similar improvements can be made by those skilled in the art without contradicting the contents of the present application, so the present application is not limited by the specific embodiments disclosed below.

An embodiment of the present application provides a preparation method for trimethyl aluminum, comprising the steps of: reacting methyl aluminum dichloride or sesquimethyl aluminum chloride or dimethyl aluminum chloride with a system of metal M and methyl chloride in the presence of catalyst and solvent, to produce trimethyl aluminum and chloride of metal M; wherein the catalyst is selected from metals or their ions which rank after aluminum in the electrochemical series; the metal M is selected from alkali metals, alkaline earth metals or combinations thereof.

In the presence of catalyst and solvent, methyl aluminum dichloride reacts with metal M and methyl chloride according to the following chemical reaction equation 1:

CH₃AlCl₂+M+CH₃Cl-(CH₃)₃Al+MClₓ (1);

Wherein the value of x is 1 when metal M is an alkali metal and the value of x is 2 when metal M is an alkaline earth metal.

In the presence of catalyst and solvent, sesquimethyl aluminum chloride reacts with metal M and methyl chloride according to the following chemical reaction equation 2:

(CH₃)₃Al₂Cl₃ + M + CH₃Cl → (CH₃)₃Al + MClₓ (2);

Wherein the value of x is 1 when metal M is an alkali metal and the value of x is 2 when metal M is an alkaline earth metal.

In the presence of catalyst and solvent, dimethyl aluminum chloride reacts with metal M and methyl chloride according to the following chemical reaction equation 3:

(CH₃)₂AlCl + M + CH₃Cl→ (CH₃)₃Al + MClₓ (3);

Wherein the value of x is 1 when metal M is an alkali metal and the value of x is 2 when metal M is an alkaline earth metal.

When the reaction occurs according to the above chemical reaction equation 1, chemical reaction equation 2 and chemical reaction equation 3 respectively, in the presence of catalyst and solvent, methyl aluminum dichloride or sesquimethyl aluminum chloride or dimethyl aluminum chloride first reacts with metal M to produce newly generated aluminum in situ, and the newly generated aluminum reacts with methyl chloride to produce sesquimethyl aluminum chloride, which in turn reacts with metal M and methyl chloride according to chemical reaction equation 2, thus converting the aluminum element in either methyl aluminum dichloride or sesquimethyl aluminum chloride or dimethyl aluminum chloride into the form of trimethyl aluminum.

In the presence of catalyst and solvent, methyl aluminum dichloride reacts with metal M to produce newly generated aluminum in situ according to the following chemical reaction equation 4:

CH₃AlCl₂ + M → (CH₃)₃Al + Al + MClₓ (4);

wherein the value of x is 1 when metal M is an alkali metal and the value of x is 2 when metal M is an alkaline earth metal.

In the presence of catalyst and solvent, sesquimethyl aluminum chloride reacts with metal M to produce newly generated aluminum in situ according to the following chemical reaction equation 5:

(CH₃)₃Al₂Cl₃ + M → (CH₃)₃Al + Al + MClₓ (5);

wherein the value of x is 1 when metal M is an alkali metal and the value of x is 2 when metal M is an alkaline earth metal.

In the presence of catalyst and solvent, dimethyl aluminum chloride reacts with metal M to produce newly generated aluminum in situ according to the following chemical reaction equation 6:

(CH₃)₂AlCl + M → (CH₃)₃Al + Al + MClₓ (6);

wherein the value of x is 1 when metal M is an alkali metal and the value of x is 2 when metal M is an alkaline earth metal.

In the presence of catalyst and solvent, newly generated aluminum reacts with methyl chloride to produce sesquimethyl aluminum chloride according to the following chemical reaction equation 7:

Al+CH₃Cl→(CH₃)₃Al₂Cl₃ (7).

The addition of metal or its ion which ranks after aluminum in the electrochemical series to the reaction system increases the reaction rate and results in higher reaction yield and purity of the product. This allows the reaction to be carried out under very simple experimental conditions such as near atmospheric pressure, i.e., the pressure of methyl chloride can be maintained near atmospheric pressure to ensure effective reaction. However, the metal or its ion, which ranks after aluminum in the electrochemical series, is not consumed during the reaction. In the absence of the catalyst, reaction rate, reaction yield and product purity significantly decrease under substantially the same experimental conditions. Moreover, due to the presence of the catalyst, methyl aluminum dichloride or sesquimethyl aluminum chloride or dimethyl aluminum chloride with metal M and methyl chloride can react very sufficiently, and the product is free of aluminum metal as a by-product and unreacted alkali or alkaline earth metals, which makes the handling of the product more convenient.

In a preferred embodiment, methyl chloride is introduced after methyl aluminum dichloride or sesquimethyl aluminum chloride or dimethyl aluminum chloride has been mixed with a portion of the metal M. That is, after methyl aluminum dichloride or sesquimethyl aluminum chloride or dimethyl aluminum chloride is added to the experimental apparatus, a portion of the metal M is added and mixed first. In the process of mixing, methyl aluminum dichloride or sesquimethyl aluminum chloride or dimethyl aluminum chloride reacts with the portion of the metal M first, and then methyl chloride is introduced, wherein the weight ratio of the portion of the metal M relative to the total metal M required for the reaction is preferably between (0.001-0.5): 1, more preferably between (0.01-0.5):1, further preferably between (0.1-0.5):1, and can specifically be 0.1:1,0.2:1,0.3:1,0.4:1, or 0.5:1. A portion of the metal M is added to methyl aluminum dichloride or sesquimethyl aluminum chloride or dimethyl aluminum chloride and then methyl chloride is introduced, which can prevent methyl chloride from being consumed by reacting with the more reactive metal M first. metal M is generally solid at room temperature, and can be added dropwise to the experimental apparatus after turning into liquid by heating.

In this application, methyl aluminum dichloride or sesquimethyl aluminum chloride or dimethyl aluminum chloride, as raw materials, can be obtained commercially. In a preferred embodiment, sesquimethyl aluminum chloride can be prepared in situ by direct reaction of metallic aluminum with methyl chloride. That is to say, sesquimethyl aluminum chloride can be first generated by the reaction of metallic aluminum and methyl chloride in the presence of catalyst and initiators before preparing trimethyl aluminum, and then can be directly used as raw material for preparing trimethyl aluminum. Since the catalyst has been introduced into the reaction system for obtaining sesquimethyl aluminum chloride, no catalyst further needs to be added when subsequently preparing trimethyl aluminum. Compared with commercial raw materials, reaction yield and product purity in the preparation of trimethyl aluminum are further improved through preparing sesquimethyl aluminum chloride in the presence of catalysts. The initiator can be at least one selected from iodine, 1,2-dibromoethane, iodomethane and sesquimethyl aluminum chloride.

The catalysts suitable for the embodiments of this application are metals or their ions which rank after aluminum in the electrochemical series. Electrochemical series, also known as activity series, is a list built up by arranging common metals (and hydrogen) in order of their standard electrode potentials from low to high. In other words, the metals suitable as the catalysts in this application have higher standard electrode potential than aluminum.

In a preferred embodiment, the catalyst is at least one selected from metals or their ions of group IB, group IIB, group IIIB, group IVB, group VB, group VIB, group VIIB, group VIII, group IIIA, and group IVA which ranks after aluminum in the electrochemical series. More preferably, it is at least one of group IB metals or their ions and group VIII metals or their ions. More preferably, the catalyst is metal elements or ions of at least one selected from silver, gold, nickel, palladium, platinum, copper, iron, and rhodium, or alloys of at least two selected from silver, gold, nickel, palladium, platinum, copper, iron, and rhodium. More preferably, the catalyst is gold, silver or copper in powder form or their ions, or any alloy thereof. Furthermore, it is very easy for a person skilled in the art to select specific catalysts in light of the teaching of the present application.

These metal elements, ions, or alloys thereof can be added individually to the reaction system. Additionally, if any part of the inner wall of the vessel containing the reaction system is plated or doped with the above-mentioned catalyst on surface, or if stirring devices in the vessel containing the reaction system is plated, doped or wrapped with the above-mentioned catalyst on surface, or if the above-mentioned catalyst exists in the reaction system in any other forms, they can all play the catalytic role as limited in this application. Therefore, these solutions are also within the protection scope of this application.

The weight ratio of the catalyst relative to the aluminum element in methyl aluminum dichloride or sesquimethyl aluminum chloride or dimethyl aluminum chloride is preferably (0.0001-0.1):1, more preferably (0.001-0.1):1, and most preferably(0.002-0.1): 1. When the catalyst is located on the surface of the inner wall of the vessel or the surface of the stirring devices in the reaction system, the amount of the used catalyst is also preferably within the above-mentioned ranges. In this application, "the weight of the aluminum element in methyl aluminum dichloride or sesquimethyl aluminum chloride or dimethyl aluminum chloride" refers to: when methyl aluminum dichloride or sesquimethyl aluminum chloride or dimethyl aluminum chloride as raw material is commercially obtained, the weight of aluminum element is the weight of aluminum element in methyl aluminum dichloride or sesquimethyl aluminum chloride or dimethyl aluminum chloride; when sesquimethyl aluminum chloride as raw material is generated by the reaction of aluminum metal and methyl chloride, the weight of the aluminum element is the weight of the raw material, namely metallic aluminum.

Metal M can be selected from alkali metals, alkaline earth metals or combinations thereof. In a preferred embodiment, the metal M can be metal element of at least one selected from sodium, potassium, and magnesium, or an alloy of at least two selected from sodium, potassium, and magnesium. All of these metal elements or alloys are effective and can perform approximately the same reduction effect. Preferably, the metal M is sodium.

The solvent suitable for use in embodiments of this application can be a commonly used solvent known in the art, such as at least one of n-hexadecane, n-decane,1,2-dichlorobenzene, 1,2,3,4-tetrahydronaphthalene, squalane, toluene, etc. Preferably, n-decane or 1,2,3,4-tetrahydronaphthalene is used as the primary solvent, and other solvents can be used as secondary solvents. By adding solvents to the reaction system, the whole reaction system can be heated and stirred more uniformly. Specifically, when solvents are used, the raw materials can be uniformly dispersed in the solvent and have a solubilizing effect on another raw material, methyl chloride gas, thus making the reactants contact more sufficiently and the reaction rate higher.

The reaction temperature is preferably in the range of 80-130 °C, more preferably in the range of 90-100 °C.

The reaction is preferably carried out at a pressure of between one atmosphere and 130 kPa. That is, the reaction is maintained at a slightly positive pressure, preferably between 105 and 115 kPa, specifically 105kPa, 110kPa, 115kPa, etc. In actual reaction, the pressure can not easily be maintained at a definite value; instead it can be maintained in a small range, such as between 105 and 110kPa, or between 110 and 115kPa, etc. Since the reaction consumes methyl chloride and converts it into solid and liquid substances, the above reaction is more favorable to proceed in the positive direction when under a slightly positive pressure. This reaction operated at slightly positive pressure in the present application apparently improves experimental efficiency and reduces the requirement of low-pressure sealing to the experimental apparatus, and this feature is very favorable to the optimization of actual process and the reduction of costs.

In the embodiment of this application, when methyl aluminum dichloride or sesquimethyl aluminum chloride or dimethyl aluminum chloride is commercially purchased, the preparation method of trimethyl aluminum can comprise the steps of:
1) adding methyl aluminum dichloride or sesquimethyl aluminum chloride or dimethyl aluminum chloride, catalyst and solvent to the reaction apparatus under the protection of inert gas, stirring to mix them uniformly, and heating to the reaction temperature;
2) adding a portion of metal M to the reaction apparatus and continuing to stir and mix for a period of time;
3) introducing methyl chloride gas into the reaction apparatus, wherein the purity of the methyl chloride gas is not less than 98% and the flow rate can be 0.001-2 g/min;
4) keeping the introduction of methyl chloride gas, continuing to add the rest of metal M, and maintaining a slightly positive pressure in the reaction apparatus until the reaction is completed;
5) regulating the pressure in the reaction apparatus to 12-14 kPa and collecting the fraction at 60-68 °C by distillation under reduced pressure to obtain the product trimethyl aluminum.

When sesquimethyl aluminum chloride is generated by the reaction of metallic aluminum with methyl chloride (in the presence of catalyst and initiator), the preparation method of trimethyl aluminum can comprise the following steps of:
1) adding metallic aluminum and catalyst to the reaction apparatus under inert gas protection;
2) starting stirring and introducing methyl chloride gas into the reaction apparatus while heating, wherein the purity of methyl chloride gas is not less than 98% and the flow rate can be 0.01-2 g/min;
3) adding initiator dropwise into the reaction apparatus;
4) maintaining the reaction temperature and keeping the reaction temperature for a period of time until the end of the reaction to obtain sesquimethyl aluminum chloride; wherein the reaction temperature is controlled at 80-130°C, preferably 90-100°C, and keeping the reaction temperature for 3-6 hours until the end of the reaction;
5) starting heating and stirring again, and adding the solvent;
6) start to introduce methyl chloride gas again after adding a portion of the metal M at the reaction temperature; wherein the purity of the methyl chloride gas is not less than 98% and the flow rate can be 0.001-2 g/min;
7) keep introducing methyl chloride gas, continuing to add the remaining amount of metal M, and maintaining a slightly positive pressure in the reaction apparatus until the reaction ends;
8) regulating the pressure in the reaction apparatus to 12-14 kPa and collect the fraction at 60-68 °C by reduced-pressure distillation to obtain the product trimethyl aluminum.

The flow rate of methyl chloride gas can be regulated according to the variation in the reaction temperature and the reading of the gas flow meter equipped at the end of the experimental apparatus. Specifically, when the reaction temperature rises, the flow rate of methyl chloride gas is increased, and the flow rate is determined based on the reading of the flow meter at the end to ensure that no gas emits from the end; conversely, when the reaction temperature falls, the gas flow rate is reduced, and the flow rate is determined based on the reading of the flow meter at the end to ensure that no gas emits from the end. This control of the flow (i.e., flow rate) of methyl chloride according to the reaction process enables methyl chloride to be fully utilized, thus saving raw materials and reducing waste gas emission.

As for the inert gases, nitrogen, argon, etc. can be chosen.

Regarding the initiator, it can be added dropwise continuously or intermittently, preferably continuously. Controlling the rate of adding the initiator dropwise can ensure the reaction can be initiated effectively. The rate can be 0.01-5 g/min, preferably 0.1-5 g/min.

Regarding the metal M, its purity can be not less than 95%, and it can be added in batches. The metal M is preferably sodium, and its purity can be not less than 95%. The temperature of the molten metal M during addition can be 100-150 °C, and the temperature inside the reaction apparatus can be 80-130 °C.

Regarding the reaction apparatus, it can be a glass reactor, and the glass reactor can have a stirring device inside.

The present application will be further described in the following with specific examples.

### Example 1

Under nitrogen atmosphere, 11.3g of commercially purchased methyl aluminum dichloride, 40 ml of n-hexadecane and 0.01g of gold powder were added to a glass reactor, and the weight ratio of gold powder to aluminum element in methyl aluminum dichloride was 0.0037. Under stirring and the temperature inside the glass reactor being maintained at 100 °C, molten sodium metal (the heating temperature to make sodium metal melt was 130 °C) was added dropwise to the reactor in batches. After adding 1 g of molten sodium metal dropwise, methyl chloride was introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 9.2 g of sodium metal had been added dropwise. Stirring continued to last for approximately 2.2 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 6.3 g of trimethyl aluminum. The reaction yield was approximately 87%, and the product purity was approximately 97%.

### Example 2

Under nitrogen atmosphere, 20.5 g of commercially purchased sesquimethyl aluminum chloride, 40 ml of n-hexadecane and 0.1g of silver powder were added to a glass reactor, and the weight ratio of silver powder to aluminum element in sesquimethyl aluminum chloride was 0.019. Under stirring and the temperature inside the glass reactor being maintained at 100 °C, molten sodium metal (the heating temperature to make sodium metal melt was 130 °C) was added dropwise to the reactor in batches. After adding 4 g of molten sodium metal dropwise, methyl chloride was introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 13.8 g of sodium metal had been added dropwise. Stirring continued to last for approximately 3.1 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 12.5 g of trimethyl aluminum. The reaction yield was approximately 87%, and the product purity was approximately 98%.

### Example 3

Under nitrogen atmosphere, 9.2 g of commercially purchased dimethyl aluminum chloride, 40 ml of n-hexadecane and 0.27 g of copper powder were added to a glass reactor, and the weight ratio of copper powder to aluminum element in dimethyl aluminum chloride was 0.1. Under stirring and the temperature inside the glass reactor being maintained at 100 °C, molten sodium metal (the heating temperature to make sodium metal melt was 130 °C) was added dropwise to the reactor in batches. After adding 1.1 g of molten sodium metal dropwise, methyl chloride was introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 4.6 g of sodium metal had been added dropwise. Stirring continued to last for approximately 2.2 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 6.2 g of trimethyl aluminum. The reaction yield was approximately 86%, and the product purity was approximately 97%.

### Example 4

Under nitrogen atmosphere, 5.4 g of aluminum chip and 0.01 g of silver powder were added to a glass reactor. The weight ratio of silver powder to aluminum chip was 0.0019. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of iodomethane was added dropwise using a barrel syringe. The flow rate of methyl chloride was regulated to 0.3-0.5 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 2.4 hours, resulting in sesquimethyl aluminum chloride.

40 ml of n-hexadecane was added to the glass reactor. The temperature in the glass reactor was maintained at 100 °C. Molten sodium metal (the temperature of making sodium metal melt was 130 °C) was added dropwise to the reactor in batches. After adding 5 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 13.8 g of sodium metal had been added dropwise. After finishing the addition of sodium metal, stirring continued for approximately 3 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 13.3 g of trimethyl aluminum. The reaction yield was approximately 92%, and the product purity was approximately 98%.

### Example 5

Under nitrogen atmosphere, 5.4 g of aluminum chip and 0.54 g of copper powder were added to a glass reactor. The weight ratio of copper powder to aluminum chip was 0.1. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of iodine elment was added dropwise using a barrel syringe. The flow rate of methyl chloride was regulated to 0.3-0.5 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 2.4 hours, resulting in sesquimethyl aluminum chloride.

40 ml of n-hexadecane was added to the glass reactor. The temperature in the glass reactor was maintained at 100 °C. Molten sodium metal (the temperature of making sodium metal melt was 130 °C) was added dropwise to the reactor in batches. After adding 3 g of molten sodium metal dropwise, methyl chloride was started to be introduced into the reactor at a flow rate of 0.2g/min. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 13.8 g of sodium metal had been added dropwise. After finishing addition of sodium metal, stirring continued for approximately 3 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 13.9 g of trimethyl aluminum. The reaction yield was approximately 96%, and the product purity was approximately 97%.

### Example 6

Under nitrogen atmosphere, 5.4 g of aluminum chip and 0.1 g of gold powder were added to a glass reactor. The weight ratio of gold powder to aluminum chip was 0.019. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of iodomethane was added dropwise using a barrel syringe. The flow rate of methyl chloride was regulated to 0.3-0.8 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 4 hours, resulting in sesquimethyl aluminum chloride.

40 ml of 1,2,3,4-tetrahydronaphthalene was added to the glass reactor. The temperature in the glass reactor was maintained at 100 °C. Molten sodium metal (the temperature of making sodium metal melt was 130 °C) was added dropwise to the reactor in batches. After adding 2.3 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 13.8 g of sodium metal had been added dropwise. After finishing addition of sodium metal, stirring continued for approximately 3 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 14 g of trimethyl aluminum. The reaction yield was approximately 97%, and the product purity was approximately 97%.

### Example 7

Under nitrogen atmosphere, 5.4 g of aluminum chip and 0.01 g of silver/copper alloy (the weight ratio of silver/copper is 3:14) were added to a glass reactor. The weight ratio of silver/copper alloy to aluminum chip was 0.0019. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of sesquimethyl aluminum chloride was added dropwise using a barrel syringe. The flow rate of methyl chloride was regulated to 0.3-0.8 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 3.3 hours, resulting in sesquimethyl aluminum chloride.

40 ml of 1,2,3,4-tetrahydronaphthalene was added to the glass reactor. The temperature in the glass reactor was maintained at 100 °C. Molten sodium metal (the temperature of making sodium metal melt was 130 °C) was added dropwise to the reactor in batches. After adding 4.5 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 13.8 g of sodium metal had been added dropwise. After finishing addition of sodium metal, stirring continued for approximately 4 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 14.1 g of trimethyl aluminum. The reaction yield was approximately 98%, and the product purity was approximately 98%.

### Example 8

Under nitrogen atmosphere, 5.4 g of aluminum chip and 0.02 g of nickel were added to a glass reactor. The weight ratio of nickel to aluminum chip was 0.0037. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of iodomethane was added dropwise using a barrel syringe. The flow rate of methyl chloride was regulated to 0.3-0.8 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 3.3 hours, resulting in sesquimethyl aluminum chloride.

40 ml of 1,2,3,4-tetrahydronaphthalene was added to the glass reactor. The temperature in the glass reactor was maintained at 100 °C. Molten sodium metal (the temperature of making sodium metal melt was 130 °C) was added dropwise to the reactor in batches. After adding 5 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 13.8 g of sodium metal had been added dropwise. After finishing addition of sodium metal, stirring continued for approximately 4 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 13.8 g of trimethyl aluminum. The reaction yield was approximately 96%, and the product purity was approximately 97%.

### Example 9

Under nitrogen atmosphere, 5.4 g of aluminum chip and 0.02 g of cobalt were added to a glass reactor. The weight ratio of cobalt to aluminum chip was 0.0037. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of iodomethane was added dropwise using a barrel syringe. The flow rate of methyl chloride was regulated to 0.3-0.8 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 3.3 hours, resulting in sesquimethyl aluminum chloride.

40 ml of 1,2,3,4-tetrahydronaphthalene was added to the glass reactor. The temperature in the glass reactor was maintained at 100 °C. Molten sodium metal (the temperature of making sodium metal melt was 130 °C) was added dropwise to the reactor in batches. After adding 4.4 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 110-115 kPa until a total 13.8 g of sodium metal had been added dropwise. After finishing addition of sodium metal, stirring continued for approximately 4 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 13.9 g of trimethyl aluminum. The reaction yield was approximately 96%, and the product purity was approximately 97%.

### Example 10

Under nitrogen atmosphere, 81 g of aluminum chip was added to a glass reactor. A stirring device was a polytetrafluoroethylene (PTFE) stirrer wound with silver wires around it, wherein the weight of silver wires was approximately 0.73 g. The weight ratio of silver wires to aluminum chip was 0.009. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 6 g of iodomethane was added dropwise using a barrel syringe. The flow rate of methyl chloride was regulated to 0.3-0.8 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 5.4 hours, resulting in sesquimethyl aluminum chloride.

600 ml of 1,2-dichlorobenzene and n-decane (the volume ratio of 1,2-dichlorobenzene and n-decane being 1:4) were added to the glass reactor. The temperature in the glass reactor was maintained at 100 °C. Molten sodium metal (the temperature of making sodium metal melt was 130 °C) was added dropwise to the reactor in batches. After adding 5 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 105-110 kPa until a total 207 g of sodium metal had been added dropwise. After finishing addition of sodium metal, stirring continued for approximately 5.5 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 211 g of trimethyl aluminum. The reaction yield was approximately 98%, and the product purity was approximately 97%.

### Example 11

Under nitrogen atmosphere, 5.4 g of aluminum chip and 0.01 g of bismuth chloride were added to a glass reactor. The weight ratio of bismuth ions of bismuth chloride to aluminum chip was 0.0012. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of iodomethane was added dropwise using a barrel syringe. The flow rate of methyl chloride was regulated to 0.3-0.8 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 2.6 hours, resulting in sesquimethyl aluminum chloride.

40 ml of n-hexadecane was added to the glass reactor. The temperature in the glass reactor was maintained at 100 °C. Molten sodium metal (the temperature of making sodium metal melt was 130 °C) was added dropwise to the reactor in batches. After adding 6 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 105-110 kPa until a total 13.8 g of sodium metal had been added dropwise. After finishing addition of sodium metal, stirring continued for approximately 3.1 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 13.5 g of trimethyl aluminum. The reaction yield was approximately 94%, and the product purity was approximately 96%.

### Example 12

Under nitrogen atmosphere, 5.4 g of aluminum chip and 0.017 g of cobalt chloride were added to a glass reactor. The weight ratio of cobalt ions of cobalt chloride to aluminum element in aluminum chip was 0.0014. Stirring was started, and the glass reactor was heated to 90 °C. After stirring for 15 minutes, methyl chloride was started to be introduced into the reactor, and its flow rate was controlled between 0.05 and 0.1 g/min. Stirring continued for an additional 10 minutes, and approximately 0.5 g of iodomethane was added dropwise using a barrel syringe. The flow rate of methyl chloride was regulated to 0.3-0.8 g/min, and the reaction pressure was controlled between 115 and 120 KPa. The flow rate of methyl chloride was regulated using a gas flow meter installed at the end of the experimental apparatus to ensure no gas emitted from the end. The reaction continued until methyl chloride was no longer absorbed, with a total reaction time of approximately 2.3 hours, resulting in sesquimethyl aluminum chloride.

40 ml of n-hexadecane was added to the glass reactor. The temperature in the glass reactor was maintained at 100 °C. Molten sodium metal (the temperature of making sodium metal melt was 130 °C) was added dropwise to the reactor in batches. After adding 4 g of molten sodium metal dropwise, methyl chloride was started to be introduced into the reactor. Molten sodium metal continued to be added dropwise while introducing methyl chloride. The flow rate of methyl chloride was regulated using a gas flow meter installed at the end of the experimental apparatus to ensure no gas emitted from the end. The pressure inside the glass reactor was maintained at 105-110 kPa until a total 13.8 g of sodium metal had been added dropwise. After finishing addition of sodium metal, stirring continued for approximately 3.1 hours until methyl chloride was no longer absorbed. Then methyl chloride was stopped from being introduced, and the reaction system was cooled to room temperature.

A distillation apparatus was installed on the glass reactor, and the pressure was regulated to between 12 and 14 kPa. A fraction of 60-68 °C was collected, obtaining approximately 13.6 g of trimethyl aluminum. The reaction yield was approximately 94%, and the product purity was approximately 97%.

### Comparative Example 1

Under nitrogen atmosphere, 11.3 g of commercially purchased methyl aluminum dichloride and 40 ml of n-hexadecane were added to a glass reactor. Stirring was started, and the temperature in the glass reactor was maintained at 100 °C. Molten sodium metal (the temperature of making sodium metal melt was 130 °C) was added dropwise to the reactor in batches. After adding 1 g of sodium metal dropwise, gray-black substance was observed to gradually emerge on the surface of the sodium metal. Methyl chloride was started to be introduced. Molten sodium metal continued to be added dropwise while methyl chloride being introduced. The flow rate of methyl chloride was regulated using a gas flow meter installed at the end of the experimental apparatus to ensure no gas emitted from the end. The methyl chloride gas was absorbed relatively fast in the early stage, while in the later stage, black solid was observed in the glass reactor and there was no apparent gas absorption. The pressure in the glass reactor was still maintained at 110-115 kPa until a total of 9.2 g of sodium metal had been added dropwise. Stirring continued for approximately 2.2 hours, and then methyl chloride was stopped from being introduced. Methyl chloride was no longer absorbed at this time.The reaction system was cooled to room temperature.

A distillation apparatus was installed on the glass reactor, and the pressure was regulated to between 12 and 14 kPa. A fraction of 60-68 °C was collected, obtaining approximately 1.3 g of trimethyl aluminum. The reaction yield was approximately 18%, and the product purity was approximately 81%.

### Comparative Example 2

Under nitrogen atmosphere, 20.5 g of commercially purchased sesquimethyl aluminum chloride and 40 ml of n-hexadecane were added to a glass reactor. Stirring was started, and the temperature in the glass reactor was maintained at 100 °C. Molten sodium metal (the temperature of making sodium metal melt was 130 °C) was added dropwise to the reactor in batches. After adding 4 g of sodium metal dropwise, gray-black substance was observed to gradually emerge on the surface of the sodium metal. Methyl chloride was started to be introduced. Molten sodium metal continued to be added dropwise while methyl chloride being introduced. The flow rate of methyl chloride was regulated using a gas flow meter installed at the end of the experimental apparatus to ensure no gas emitted from the end. The methyl chloride gas was absorbed relatively fast in the early stage, while in the later stage, black solid was observed in the glass reactor and there was no apparent gas absorption. The pressure in the glass reactor was still maintained at 110-115 kPa until a total of 13.8 g of sodium metal had been added dropwise. Stirring continued for approximately 3.1 hours, and then methyl chloride was stopped from being introduced. Methyl chloride was no longer absorbed at this time.The reaction system was cooled to room temperature.

A distillation apparatus was installed on the glass reactor, and the pressure was regulated to between 12 and 14 kPa. A fraction of 60-68 °C was collected, obtaining approximately 2.1 g of trimethyl aluminum. The reaction yield was approximately 15%, and the product purity was approximately 83%.

### Comparative Example 3

Under nitrogen atmosphere, 9.2 g of commercially purchased dimethyl aluminum chloride and 40 ml of n-hexadecane were added to a glass reactor. Stirring was started, and the temperature in the glass reactor was maintained at 100 °C. Molten sodium metal (the temperature of making sodium metal melt was 130 °C) was added dropwise to the reactor in batches. After adding 1.1 g of sodium metal dropwise, gray-black substance was observed to gradually emerge on the surface of the sodium metal. Methyl chloride was started to be introduced. Molten sodium metal continued to be added dropwise while methyl chloride being introduced. The flow rate of methyl chloride was regulated using a gas flow meter installed at the end of the experimental apparatus to ensure no gas emitted from the end. The methyl chloride gas was absorbed relatively fast in the early stage, while in the later stage, black solid was observed in the glass reactor and there was no apparent gas absorption. The pressure in the glass reactor was still maintained at 110-115 kPa until a total of 4.6 g of sodium metal had been added dropwise. Stirring continued for approximately 2.2 hours, and then methyl chloride was stopped from being introduced. Methyl chloride was no longer absorbed at this time.The reaction system was cooled to room temperature.

A distillation apparatus was installed on the glass reactor, and the pressure was regulated to between 12 and 14 kPa. A fraction of 60-68 °C was collected, obtaining approximately 1.2 g of trimethyl aluminum. The reaction yield was approximately 17%, and the product purity was approximately 80%.

### Comparative Example 4

Under nitrogen atmosphere, 5.4 g of aluminum chip was added to a glass reactor. Stirring was started, and the glass reactor was heated to 90 °C. After stirring for 15 minutes, methyl chloride was started to be introduced, and the flow rate was controlled at 0.05 -0.1 g/min. Stirring continued for an additional 10 minutes, and approximately 0.5 g of iodomethane was added dropwise using a barrel syring. The flow rate of methyl chloride was regulated to 0.3-0.5 g/min , and the reaction pressure was controlled at 115-120 KPa. The total reaction time was approximately 2.4 hours. Over the above process, methyl chloride was not absorbed substantially, indicating that the aluminum chip and methyl chloride did not react substantially, and it was difficult to effectively obtain sesquimethyl aluminum chloride.

### Comparative Example 5

Comparative Example 5 was largely the same as Comparative Example 4, except that the total reaction time was extended to 7 days. The specific experimental process was as follows:
Under nitrogen atmosphere, 5.4 g of aluminum chip was added to a glass reactor. Stirring was started, and the glass reactor was heated to 90°C. After stirring for 15 minutes, methyl chloride was started to be introduced, and the flow rate was controlled at 0.05-0.1 g/min. Stirring continued for an additional 10 minutes, and approximately 0.5 g of iodomethane was added dropwise using a barrel syringe. The flow rate of methyl chloride was regulated to 0.3-0.5 g/min, and the reaction pressure was controlled at 115-120 KPa. The reaction continued until the aluminum chip was completely reacted to form sesquimethyl aluminum chloride. The total reaction time was 7 days.

### Comparative Example 6

Under nitrogen atmosphere, 20.5 g of commercially purchased sesquimethyl aluminum chloride, 40 ml of n-hexadecane and 0.1 g of silver powder were added to a glass reactor. The weight ratio of silver powder to aluminum element of sesquimethyl aluminum chloride was 0.019. The temperature inside the glass reactor was maintained at 100 °C. Methyl chloride was started to be introduced, and molten sodium metal was added dropwise into the reactor while methyl chloride being introduced. The flow rate of methyl chloride was regulated using a gas flow meter installed at the end of the experimental apparatus to ensure no gas emitted from the end. The pressure in the glass reactor was maintained at 110-115 kPa until a total of 13.8 g of sodium metal had been added dropwise. Stirring continued for approximately 3.1 hours, and then methyl chloride was stopped from being introduced. The reaction system was cooled to room temperature.

A distillation apparatus was installed on the glass reactor, and the pressure was regulated to between 12 and 14 kPa. A fraction of 60-68 °C was collected, obtaining approximately 12.5 g of trimethyl aluminum. The reaction yield was approximately 80%, and the product purity was approximately 97%.

From Example 1 and Comparative Example 1, Example 2 and Comparative Example 2, Example 3 and Comparative Example 3, it can be seen that when methyl aluminum dichloride, sesquimethyl aluminum chloride or dimethyl aluminum chloride was commercially purchased, reaction yield and product purity both significantly improve when the catalyst is used in the reaction.

From Example 2 and Examples 4 to 12, it can be seen that when sesquimethyl aluminum chloride comes from the reaction of aluminum metal and methyl chloride, both reaction yield and product purity significantly improve, compared to using commercially purchased sesquimethyl aluminum chloride

From Example 4 and Comparative Example 4, it can be seen that under the same experimental conditions, it is difficult for aluminum metal to react with methyl chloride without the catalyst to produce sesquimethyl aluminum chloride, rendering substantially impossible to effectively prepare trimethyl aluminum. From Example 4 and Comparative Example 5, it can be seen that in presence of the catalyst, aluminum metal and methyl chloride react significantly fast, making the total reaction time reduce from 7 days to 2.4 hours.

From Example 2 and Comparative Example 6, it can be seen that under the experimental conditions of such as pressure ranges and reactant ratios being substantially the same, the reaction yield significantly improves when methyl chloride is introduced after a portion of sodium metal mixes with sesquimethyl aluminum chloride.

Now it is contemplated by one skilled in the art that although several exemplary embodiments of the present invention are herein detailedly shown and described, it is still possible to directly determine or derive many other variations or modifications within the spirit and scope of the present invention. Therefore, the scope of the present disclosure shall be understood and construed to cover all such other variations or modifications.

## Claims

1. A preparation method for trimethyl aluminum, comprising the steps of: reacting methyl aluminum dichloride or sesquimethyl aluminum chloride or dimethyl aluminum chloride with a system of metal M and methyl chloride in the presence of catalyst and solvent to produce trimethyl aluminum and chloride of metal M; wherein the catalyst is selected from metals or their ions which rank after metallic aluminum in the electrochemical series; the metal M is selected from alkali metals, alkaline earth metals or combinations thereof.

2. The preparation method according to claim 1, **characterized in that** in the presence of the catalyst and the solvent, methyl aluminum dichloride or sesquimethyl aluminum chloride or dimethyl aluminum chloride is reacted with the metal M to produce in situ newly generated aluminum, and the newly generated aluminum is reacted with methyl chloride to produce sesquimethyl aluminum chloride.

3. The preparation method according to claim 1, **characterized in that** methyl chloride is introduced after methyl aluminum dichloride, sesquimethyl aluminum chloride or dimethyl aluminum chloride has been mixed with a portion of the metal M.

4. The preparation method according to claim 3, **characterized in that** a weight ratio of the portion of the metal M relative to the total metal M required for the reaction is (0.001-0.5): 1.

5. The preparation method according to claim 1, **characterized in that** the sesquimethyl aluminum chloride is obtained by reacting aluminum metal with methyl chloride in the presence of the catalyst and an initiator.

6. The preparation method according to claim 5, **characterized in that** the initiator is at least one selected from elemental iodine, 1,2-dibromoethane, iodomethane, and sesquimethyl aluminum chloride.

7. The preparation method according to claim 1, **characterized in that** the catalyst is at least one selected from group IB metals or their ions and group VIII metals or their ions which rank after aluminum in the electrochemical series.

8. The preparation method according to claim 7, **characterized in that** the catalyst is metal elements or ions of at least one selected from silver, gold, nickel, palladium, platinum, copper, iron, and rhodium, or alloys of at least two selected from silver, gold, nickel, palladium, platinum, copper, iron, and rhodium.

9. The preparation method according to claim 1, **characterized in that** the catalyst is used in a weight ratio of (0.0001-0.1): 1 relative to the elemental aluminum in the methyl aluminum dichloride, sesquimethyl aluminum chloride, or dimethyl aluminum chloride.

10. The preparation method according to claim 1, **characterized in that** the metal M is metal elements of at least one selected from sodium, potassium, and magnesium, or alloys of at least two selected from sodium, potassium, and magnesium.

11. The preparation method according to claim 1, **characterized in that** the solvent is at least one selected from n-hexadecane, n-decane, 1,2-o-dichlorobenzene, 1,2,3,4-tetrahydronaphthalene, squalane, and toluene.

12. The preparation method according to claim 1, **characterized in that** the temperature of the reaction is between 80 °C and 130 °C.

13. The preparation method according to claim 1, **characterized in that** the reaction is carried out at a pressure between one atmosphere to 130 kPa.

14. The preparation method according to claim 1, **characterized in that** flow rate of methyl chloride is regulated according to temperature variation of the reaction and readings of a gas flow meter installed at the end of the experimental apparatus.
